# EUROPEAN PATENT SPECIFICATION

(11) **EP 1 724 184 B1**
(45) Date of publication and mention of the grant of the patent: **11.03.2009**
(21) Application number: 06251875.8
(22) Date of filing: 03.04.2006
(51) Int. Cl.: B62D 25/20

(54) **Vehicle floor structure**
Fussbodenstruktur eines Kraftfahrzeuges
Structure de plancher de véhicule automobile

(30) Priority: 18.05.2005 JP 2005145178
(43) Date of publication of application: 22.11.2006
(73) Proprietor: HONDA MOTOR CO., LTD., Tokyo 107-8556 (JP)
(72) Inventor: Hattori, Hiroyuki Honda R&D Co. Ltd., Saitama, 351-0193 (JP); Ohkura, Kenji Honda R&D Co. Ltd., Saitama, 351-0193 (JP); Takai, Akikazu Honda R&D Co. Ltd., Saitama, 351-0193 (JP); Haga, Takenobu Honda R&D Co. Ltd., Saitama, 351-0193 (JP); Kobayashi, Kazuhiro Honda R&D Co. Ltd., Saitama, 351-0193 (JP); Matsumura, Katsuya Honda R&D Co. Ltd., Saitama, 351-0193 (JP)
(74) Representative: Piésold, Alexander James

(56) References cited:
- WO-A-03/022661
- DE-A1- 10 235 532
- JP-A- 10 226 307
- JP-A- 2003 205 870

## Description

The present invention relates to a vehicle floor structure.

In some of the automobiles currently on the market, a large component part such as a fuel tank and engine is centrally placed under a floor panel. In such a case, the remaining part of the floor panel can be kept at a low level by bulging the corresponding part of the panel upward or toward the passenger compartment. Also, by placing such a bulging part under the front seats, the inconvenience of having such an undesired protrusion into the passenger compartment can be minimized (See Japanese patent laid open publication No. 2002-302071, for instance).

A floor panel of a vehicle such as a sedan and station wagon is formed by stamp forming a relatively thin steel plate, and is typically provided with a floor tunnel extending in a fore-and-aft direction to ensure a required mechanical strength and rigidity. To further increase the mechanical strength and rigidity, the floor panel may be further provided with a laterally extending cross member.

When a fuel tank is installed under a floor panel and a filler pipe is provided in a rear part of the vehicle, at least a fuel pipe and a breather pipe are required to be installed between the fuel tank and filler pipe. Also, when a fuel tank is installed under a floor panel and the floor panel of the corresponding part bulges into the passenger compartment, the cross member cannot be provided under the front seats, and must be attached to a different part of the floor panel that does not interfere with the fuel tank. In such a vehicle, the pipes must be provided across the cross member. Therefore, it is conceivable to form the cross member from two separate pieces that are laterally spaced from each other to provide a space for passing the pipes and use an additional member bridging between the two separate pieces to make up for the reduction in mechanical strength and rigidity owing to the splitting of the cross member into two parts.

However, splitting the cross member into two pieces significantly decreases the mechanical strength, and the additional member is required to be more massive than desired so as to compensate for the decrease in the mechanical strength. Also, the need for the additional member complicates the manufacturing process, and increases the material and labor costs.

The same problem arises whenever a component part is required to be extended between a front part of a vehicle body to a rear part thereof under a floor panel, and such a component part may include a member for transmitting torque or force, various forms of pipes and wire harnesses, among other possibilities.

In view of such problems of the prior art, a primary object of the present invention is to provide a vehicle floor structure which allows a component part to be passed between a front part and rear part of a vehicle body under a floor panel without compromising the mechanical strength and rigidity of the vehicle body.

A second object of the present invention is to provide a vehicle floor structure which allows a component part to be passed under without reducing the minimum height of the bottom surface of a vehicle body.

A third object of the present invention is to provide a vehicle floor structure which allows a component part to be passed under without increasing the number of components parts.

It is known from DE 102 35 532 A to provide a vehicle floor structure, comprising:
a floor panel including a floor tunnel extending in a fore-and-aft direction; and
a cross member extending laterally on a lower surface of the floor panel and including a front wall and a rear wall, the two walls being formed with openings that substantially align with each other.

The present invention is characterised in that the cross member includes an end plate that fills a recess defined by the floor tunnel at a part thereof intersecting the cross member.

Thus, according to the present invention, when a component part is passed through the cross member attached to the lower surface of the floor panel, the component part can be passed through the openings formed in the front and rear walls of the cross member, and there is no need to split the cross member into right and left pieces. Because the cross member is provided for the purpose of increasing the mechanical strength against a bending moment around a longitudinal line, the splitting the cross member into the right and left pieces may reduce the mechanical strength against such a bending moment. However, because the present invention allows the component part to be passed through the cross member without requiring the cross member to be split into two pieces, the mechanical strength of the cross member is not compromised, and a required mechanical strength can be ensured.

Further, according to the present invention, when the floor panel includes a floor tunnel extending in a fore-and-aft direction and the cross member includes an end plate that fills a recess defined by the floor tunnel at a part thereof intersecting the cross member so as to maximize the mechanical strength and rigidity.

Preferably, the cross member defines a closed cross section jointly with the lower surface of the floor panel.

The cross member may consist of a stamp formed single-piece plate member or, alternatively, may consist of a front member and a rear member that are joined to each other by respective bottom wall portions thereof. In the latter case, each member can be individually stamp formed and the opening can be formed at the same time so that the process of forming the openings in the front and rear walls can be simplified.

To simplify the stamp forming process, the end plate may consist of a separate plate member which is attached to the cross member.

To facilitate the process of passing an elongated component part such as a pipe, rod, wire or wire harness, a tubular guide member may be fitted between the two openings for guiding a component part through the openings of the cross member.

Certain preferred embodiments of the present invention will now be described by way of example only and with reference to the appended drawings, in which
Figure 1 is a fragmentary perspective view of an automotive floor panel 1 embodying the present invention;
Figure 2 is a perspective view of the floor panel of Figure 1 as seen from below;
Figure 3 is a fragmentary sectional side view taken along line III-III of Figure 2 to show how the pipe is arranged;
Figure 4 is an illustrative view showing how cracks could develop when the end plate 8 is not made of a separate piece; and
Figure 5 is an enlarged fragmentary view similar to Figure 3 showing another embodiment of the present invention.

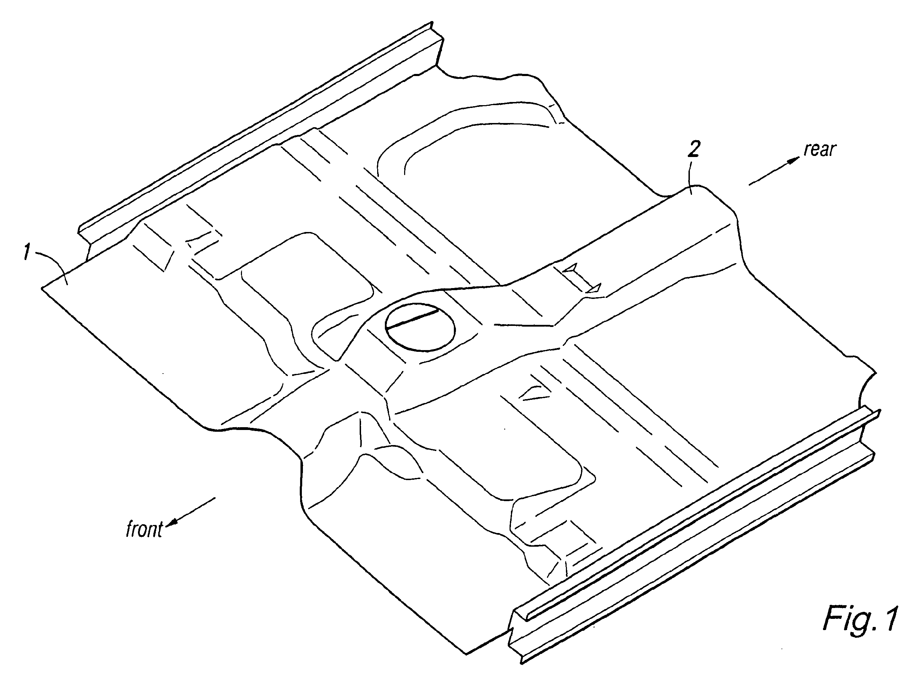

Figure 1 is a fragmentary perspective view of an automotive floor panel 1 embodying the present invention. As shown in the drawing, the floor panel 1 is made by stamp forming a relatively thin steel plate, and is provided with a plurality of beads (not shown in the drawings) so as to accommodate various components that are to be attached to the floor panel 1 and to increase the bending rigidity of the floor panel 1.

As shown in Figure 1, a laterally central part of the floor panel is formed with a floor tunnel 2 extending in a fore-and-aft direction and having a trapezoidal cross section for the purpose ensuring a bending rigidity of the vehicle body around a lateral line.

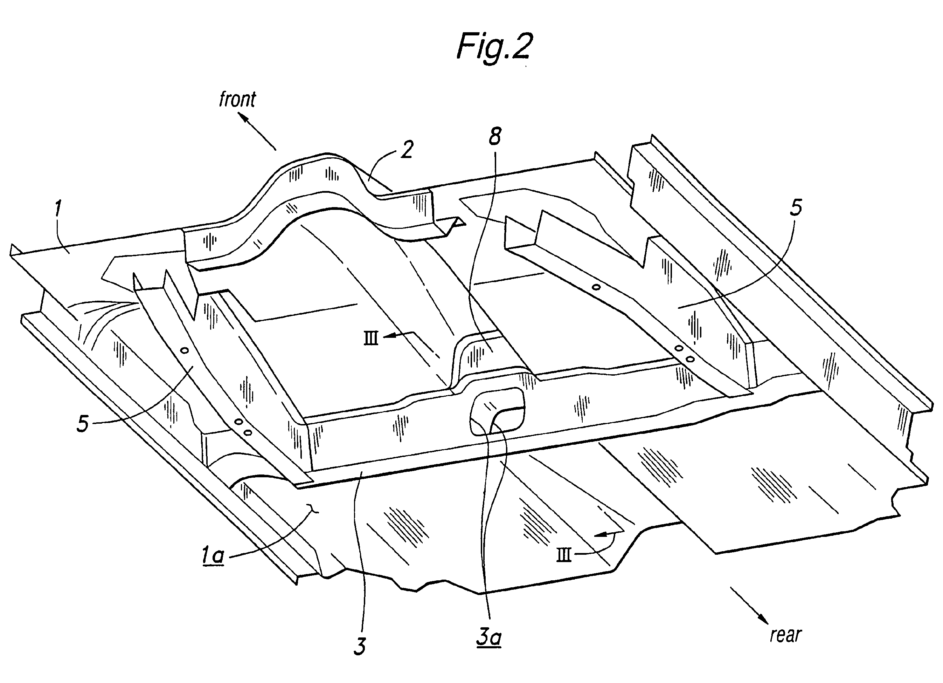

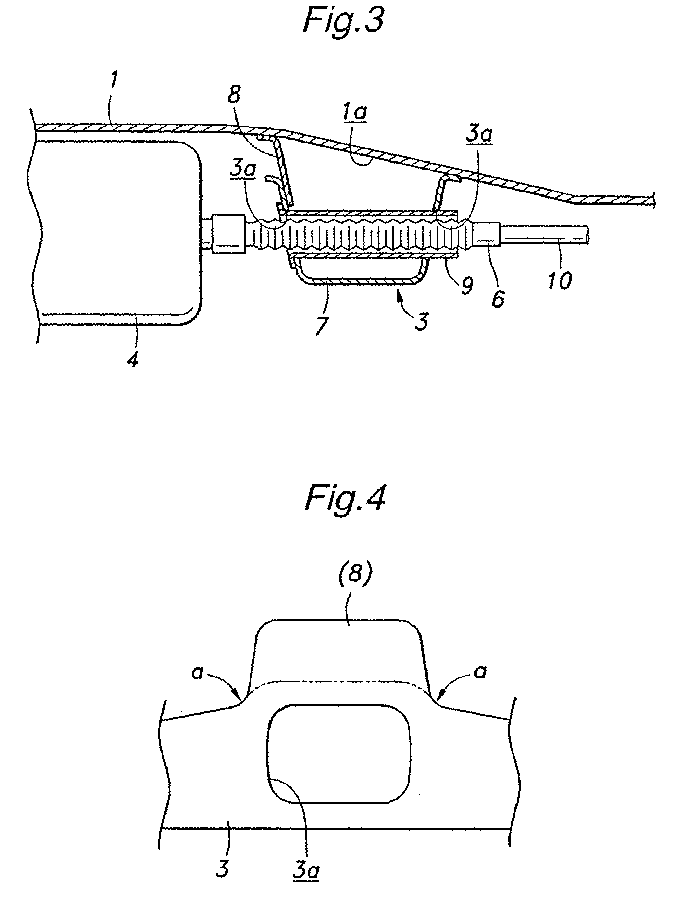

The floor panel 1 is also required to ensure an adequate bending rigidity of the vehicle body around a longitudinal line. To meet such a need, to a lower surface 1a of the floor panel 1 is attached a cross member 3 which extends laterally across the vehicle body and forms a closed cross section jointly with the lower surface 1a as best illustrated in Figure 2 showing the floor panel 1 as seen from below. The cross member 3 is provided with a U-shaped cross section as illustrated in Figure 3. The cross member 3 thus defines a substantially rectangular closed cross section jointly with the floor panel 1, and owing to this structural member defining a closed cross section extending across the width of the floor panel 1, a required bending rigidity around a longitudinal line can be ensured.

In the floor structure of the illustrated embodiment, a fuel tank 4 is installed on the lower surface 1a of the floor panel 1 as illustrated in Figure 3. As shown in Figure 2, a pair of floor frames 5 each defining a closed cross section jointly with the floor panel 1 are attached to the floor panel 1 so as to extend along and adjacent to either side sill. The front end of each floor frame 5 is connected to a rear end of a corresponding side frame extending in an engine room not shown in the drawing and the rear end of each floor frame 5 is connected to the cross member 3. When the fuel tank 4 is installed between the two floor frames 5, for instance, the fuel tank 4 can be secured in place by using a bracket or a band attached to the floor frames 5 via threaded holes provided in appropriate parts of the floor frames 5.

The cross member 3 is provided in a central part along the longitudinal direction in view of balance, and the fuel tank 4 that occupies a relatively large volume is required to be placed so as not to interfere with the cross member 3. Also, the part of the floor panel 1 receiving the fuel tank 4 inevitably bulges toward the passenger compartment particularly when the floor panel 1 is given with a relatively low elevation. To circumvent this problem, the fuel tank 4 may be provided under the front seats. When the bulging part of the floor panel 1 is located under the front seats, the part of the floor immediately in front of the rear seats is left unaffected, and the comfort of the legs of the vehicle occupants sitting in the rear seats would not be impaired.

When the fuel tank 4 is disposed as described above, because the part of the floor panel 1 directly under the front seats protrude into the passenger compartment, it is difficult to provide the cross member 3 in this region. Therefore, the cross member 3 is provided in the aforementioned location or a longitudinally central part on the under surface part of the floor panel 1. This location may be located immediately ahead of the rear seats or, alternatively, immediately ahead of the front seats. This is also desirable for the purpose of keeping the elevation of the part of the floor corresponding to the legs of the rear seat occupants at a low level. When a filler pipe is provided in a rear part of the vehicle, the pipes (a fuel pipe and breather pipe) are required to be provided between the fuel tank 4 and filler pipe (not shown in the drawing) and extend across the cross member 3. To accommodate such pipes, the corresponding parts of the cross member 3 are formed with openings 3a. These openings 3a are formed in the mutually opposing walls of the cross member 3 having a U-shaped cross section so as to align with each other.

In the illustrated embodiment, as shown in Figure 3, the cross member 3 consists of two pieces. The first piece consists of a main member 7 having a U-shaped cross section (first and second members), and the second piece consists of an end plate 8 (third member) which fills a recess defined by the floor tunnel 2 as shown in Figure 2 also. When the main member 7 and the end plate 8 are formed as a single-piece plate member, there is a risk of developing cracks in the part indicated by arrows a in Figure 4 when stamp forming the openings 3a in the mutually opposing walls of the main member 7. Therefore, in the case of the illustrated embodiment, the part of the cross member 3 shaped like a peninsula and extending from the main part of the cross member 3 is formed as a separate member so that cracks may not develop in the corresponding part when stamp forming the openings 3a in the main member 7. The main member 7 and end plate 8 may be joined together by welding.

The piping work for the fuel tank 4 can be accomplished by passing the pipe 6 through the two openings 3a. If the openings 3a are left as they are, the pipe 6 may be passed easily through one of the openings 3a, but there may be some difficulty in passing the pipe through the second opening 3a particularly when the distance between the two openings 3a is great. Therefore, a tubular guide member 9 is fitted in the two openings 3a as illustrated in Figure 3. The guide member 9 is made of plastic material, and is integrally molded with a radial flange at one end thereof for securing the guide member 9 in place. A part of the guide member 9 adjacent to the radial flange is provided with a resilient engagement piece formed with an engagement projection as a member cut out from the material of the guide member 9 so that the edge of the corresponding opening 3a may be interposed between the engagement projection of the resilient engagement piece and the radial flange and the guide member 9 may be fixedly secured in the cross member 3.

Because the pipe 6 is guided by the guide member 9 as it is passed through the space between the two openings 3a, the pipe 6 may be easily passed through both the openings 3a. To permit the pipe 9 to be passed through the openings 3a even when there are positional or dimensional errors, at least the part of the pipe 6 received by the openings 3a may be made of rubber and formed as bellows. The part of the pipe 6 made of rubber and formed as bellows is passed through the two openings 3a (guide member 9), and is connected to a metallic pipe 10 extending in a rear part of the vehicle body behind the cross member 3.

According to the vehicle floor structure described above, because the cross member 3 is not separated into two parts for passing a component part through the cross member 3, the bending rigidity of the floor panel would not be reduced. A reinforcing member that would be required if the cross member were separated into two parts would not be required, and a required mechanical strength can be ensured without requiring any such additional members.

When the cross member 3 is provided with a peninsula-like part extending into the interior of the floor tunnel 2 and formed as a separate member, the risk of developing cracks at the time of stamp forming the openings 3a for receiving the pipe 9 can be avoided. Because the cross member 3 is provided with a closed cross section, there may be some difficulty in passing the pipe or the like through the openings 3a formed in the opposing walls of the cross member 3, but placing the guide member 9 in the openings 3a eliminates such a difficulty.

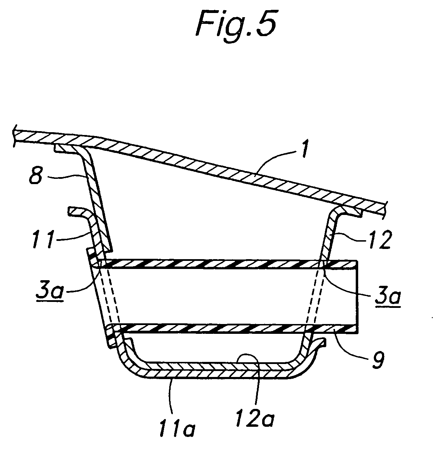

The cross member 3 consisted of two pieces in the illustrated embodiment, by may also consist of three pieces as illustrated in Figure 5. In Figure 5, the parts corresponding to those of the previous embodiment are denoted with like numerals without repeating the description of such parts.

In the structure illustrated in Figure 5, the part corresponding to the main member 7 of the previous embodiment consists of a front member (first member) 11 and a rear member (second member) 12. The two members 11 and 12 are provided with bottom wall portions 11a and 11b which are laid over each other so as to define a bottom wall of the cross member 3 opposing the floor panel 1. The two bottom wall portions 11a and 11b are welded to each other, and the two members are jointly formed into a shape similar to that of the main member 7 of the previous embodiment. Thereby, the process of stamp forming the openings 3a can be simplified.

The component part which is passed through the openings 3a of the cross member 3 consisted of a pipe 6 for a fuel tank 4 in the illustrated embodiment, but may also consist of other component parts such as a wire harness, rod for transmitting torque to a part on the side of the rear wheels or the like. When such a component is passed through the openings 3a of the cross member 3, there is no need to have a component part extend under the cross member 3, and the minimum height of the vehicle body is avoided from being reduced. Also, the bending rigidity of the cross member 3 would not be reduced.

The vehicle floor structure according to the present invention allows a component part to be passed through a cross member without reducing the bending rigidity of the cross member, and is therefore useful as a structure for passing a component part across a cross member.

Although the present invention has been described in terms of preferred embodiments thereof, it is obvious to a person skilled in the art that various alterations and modifications are possible without departing from the scope of the present invention which is set forth in the appended claims.

## Claims

1. A vehicle floor structure, comprising:
a floor panel (1) including a floor tunnel (2) extending in a fore-and-aft direction; and
a cross member (3) extending laterally on a lower surface of the floor panel and including a front wall and a rear wall, the two walls being formed with openings (3a) that substantially align with each other in a fore-and-aft direction; **characterised in that**
the cross member includes an end plate (8) that fills a recess defined by the floor tunnel at a part thereof intersecting the cross member.

2. The vehicle floor structure according to claim 1, wherein the cross member defines a closed cross section jointly with the lower surface of the floor panel.

3. The vehicle floor structure according to claim 1 or 2, wherein the cross member consists of a stamp formed single-piece plate member.

4. The vehicle floor structure according to claim 1, 2 or 3, wherein the cross member includes a front member (11) and a rear member (12) that are joined to each other by respective bottom wall portions (11a, 12a) thereof.

5. The vehicle floor structure according to any preceding claim, wherein the end plate consists of a separate plate member which is attached to the cross member.

6. The vehicle floor structure according to any preceding claim, further comprising a tubular guide member (9) for guiding a component part through the openings of the cross member that extends between the two openings.

## Patentansprüche

1. Fahrzeug-Bodenstruktur, umfassend:
eine Bodenplatte (1), umfassend einen Bodentunnel (2), der sich in eine von-Vome-nach-Hinten-Richtung erstreckt; und
ein Querelement (3), das sich lateral auf einer unteren Oberfläche der Bodenplatte erstreckt und eine Vorderwand und eine Hinterwand umfasst, wobei die zwei Wände mit Öffnungen (3a) gebildet sind, die im Wesentlichen in eine von-Vorne-nach-Hinten-Richtung zueinander ausgerichtet sind,
**dadurch gekennzeichnet, dass** das Querelement eine Endplatte (8) umfasst, die eine Aussparung ausfüllt, die durch den Bodentunnel an dessen das Querelement schneidenden Teil definiert ist.

2. Fahrzeug-Bodenstruktur nach Anspruch 1, wobei das Querelement einen geschlossenen Querschnitt gemeinsam mit der unteren Oberfläche der Bodenplatte definiert.

3. Fahrzeug-Bodenstruktur nach Anspruch 1 oder 2, wobei das Querelement ein press-gebildetes einstückiges Plattenelement umfasst.

4. Fahrzeug-Bodenstruktur nach einem der Ansprüche 1 bis 3, wobei das Querelement ein vorderes Element (11) und ein hinteres Element (12) umfasst, die miteinander durch ihre jeweiligen unteren Wandbereiche (11a, 12a) miteinander verbunden sind:

5. Fahrzeug-Bodenstruktur nach einem der vorhergehenden Ansprüche, wobei die Endplatte ein separates Plattenelement umfasst, das an dem Querelement angebracht ist.

6. Fahrzeug-Bodenstruktur nach einem der vorhergehenden Ansprüche, ferner umfassend ein röhrenförmiges Führungselement (9) zum Führen eines Komponenten-Teils durch die Öffnungen des Querelements, das sich zwischen den zwei Öffnungen erstreckt.

## Revendications

1. Structure de plancher de véhicule, comprenant :
un panneau de plancher (1) comprenant un tunnel de plancher (2) s'étendant dans une direction d'avant en arrière ; et
une traverse (3) s'étendant latéralement sur une surface inférieure du panneau de plancher et comprenant une paroi avant et une paroi arrière, les deux parois comportant des ouvertures (3a) qui s'alignent sensiblement l'une par rapport à l'autre dans une direction d'avant en arrière ; **caractérisée en ce que :**
la traverse comprend une plaque d'extrémité (8) qui remplit un évidement défini par le tunnel de plancher au niveau d'une partie de celui-ci qui coupe la traverse.

2. Structure de plancher de véhicule selon la revendication 1, dans laquelle la traverse définit une section transversale fermée conjointement avec la surface inférieure du panneau de plancher.

3. Structure de plancher de véhicule selon la revendication 1 ou 2, dans laquelle la traverse se compose d'un élément de plaque d'un seul tenant formé par estampage.

4. Structure de plancher de véhicule selon la revendication 1, 2 ou 3, dans laquelle la traverse comprend un élément avant (11) et un élément arrière (12) qui sont assemblés entre eux par leurs parties de paroi inférieure (11a, 12a) respectives.

5. Structure de plancher de véhicule selon l'une quelconque des revendications précédentes, dans laquelle la plaque d'extrémité se compose d'un élément de plaque séparé qui est fixé à la traverse.

6. Structure de plancher de véhicule selon l'une quelconque des revendications précédentes, comprenant en outre un élément de guidage tubulaire (9) pour guider une partie de composant à travers les ouvertures de la traverse qui s'étend entre les deux ouvertures.
